# EUROPÄISCHE PATENTSCHRIFT

(11) **EP 0 560 221 B1**
(45) Veröffentlichungstag und Bekanntmachung des Hinweises auf die Patenterteilung: **11.06.1997**
(21) Anmeldenummer: 93103540.6
(22) Anmeldetag: 05.03.1993
(51) Int. Cl.: F16K 15/14

(54) **Rückschlagventil**
Check valve
Soupape de retenue

(30) Priorität: 11.03.1992 CH 792/92
(43) Veröffentlichungstag der Anmeldung: 15.09.1993
(73) Patentinhaber: EMS-INVENTA AG, 8001 Zürich (CH)
(72) Erfinder: Gaehwiler, Heinz Ulrich, CH-7013 Domat/Ems (CH)
(74) Vertreter: Müller-Boré & Partner Patentanwälte

(56) Entgegenhaltungen:
- DE-A- 2 225 756
- DE-A- 2 922 940
- GB-A- 655 560
- GB-A- 1 351 401
- GB-A- 1 375 281
- US-A- 3 473 561
- US-A- 3 601 152

## Beschreibung

Die Erfindung betrifft ein Rückschlagventil wie es im Anspruch 1 beschrieben ist. Solche Ventile werden beispielsweise in Servoaggregaten zur Bremsunterstützung in Fahrzeugen verwendet und dort zum Beispiel zwischen Ansaugrohr und Servoaggregat eingebaut. Sie haben die Aufgabe, die Verbindung zwischen Saugrohr und Vakuumgefäss zu öffnen, sobald der Druck im Vakuumgefäss höher ist als im Saugrohr.

Andererseits soll das Ventil dicht anschliessen, wenn der Druck im Saugrohr höher ist als jener im Vakuumgefäss. Da moderne Fahrzeuge eine ausgeprägte Bremskraftunterstützung durch das genannte Servoaggregat haben, kommt dessen sicherer Funktion grosse Bedeutung zu, auch wenn die Bremse bei einem Ausfall der Unterstützung nicht vollständig versagt. Im Fahrzeug wird ein Rückschlagventil entweder in der Verbindungsleitung vom Saugrohr zum Vakuumbehälter geschaltet oder direkt an den Behälter angebaut.

Die sichere Funktion muss besonders unter ungünstigen Bedingungen, wie sie im Fahrzeug auftreten, gewährleistet sein. So zum Beispiel, wenn sich im Ansaugsystem vorhandener Kraftstoff im Ventil ansammelt und zu einer Quellung des Verschlussorgans führt. Ebenso ist es wichtig, dass das Ventil in jeder erdenklichen Lage und/oder Stellung des die Sperrwirkung erzeugenden Teils stets leichtgängig sperrt und/oder öffnet, dass es auch unter nur geringen Druckdifferenzen eine gute Sperrwirkung hat und dass kein unbeabsichtigter Abbau des Vakuum im Servobehälter eintreten kann.

Die weisten der bislang bekannten Ventile weisen im Regelfall Bauteile auf, die die Bewegung des die Sperrwirkung erzeugenden Bauteils unterstützen oder fördern. Meistens handelt es sich bei diesen Bauteilen um Federn oder ähnlich wirkende Elemente. Auch ist es bekannt, aufgrund baulicher Ausgestaltungen des Innengehäuses der Ventile das die Sperrwirkung der Ventile erzeugende Teil zu verformen, um die Rückstellbewegung in Sperrstellung zu fördern. Zusätzlich oder auch alternativ sind bei den bislang bekannten Ventilen häufig Gummiteile vorgesehen, die die Dichtwirkung in Sperrstellung erzeugen. Andere Ventile sind mit Membranteilen versehen, die die Oeffnungs-bzw. Sperrstellung des Ventils erzeugen. Ein gemeinsamer Nachteil der bislang bekannten Ventile besteht in der relativ grossen Anzahl der verwendeten Bauteile, deren jeweilige Funktionsfähigkeit notwendig ist, um die Wirkung des Ventils zu gewährleisten. Je grösser aber die Anzahl der einzelnen Bauteile eines Ventils ist, desto grösser ist die Gefahr des Ausfalls des einen oder anderen Bauteils. Daneben weisen die bekannten Ventile aufgrund der unterschiedlichen Bauteile eine Materialvielfalt auf, die ebenfalls nachteilig ist. Bestimmte Materialien, z.B. Federn, können in ihrer Funktionsfähigkeit durch das, das Ventil durchströmende Medium zumindest im Hinblick auf ihre Lebensfähigkeit negativ beeinflusst werden. Ferner ergeben sich bei den bislang bekannten Ventilen Probleme im Hinblick auf die Recyclefähigkeit und zwar aufgrund der unterschiedlichen Materialien der einzelnen Bauteile.

Die DE-A-29 22 940 offenbart ein Niederdruck-Einweg-Ventil, in dem das Dichtelement eine dünne Kappe aus elastischem Werkstoff ist, welche durch äußere Kräfte leicht verformbar, insbesondere dehnbar ist. Dabei ist das Dichtelement auf das Rohrende des ersten oder Eintritt-Elements presspassend aufgesetzt. Eine solche Kappe muß, um zum einwandfreien Schließen deformationsfrei rückformbar zu sein, aus hochelastischem, gummiartigem Material sein, welches jedoch nicht quellungsbeständig ist. Demensprechend ist die Schließfunktion bei dem Niederdruck-Einweg-Ventil bei auftretender Quellung nicht gewährleistet.

Es ist daher Aufgabe der vorliegenden Erfindung ein Rückschlagventil mit einem Verschlußkörper bereitzustellen, welcher eine sichere und einwandfreie Schließfunktion auch bei Quellung des Verschlußkörpers gewährleistet.

Diese Aufgabe wird erfindungsgemäß durch ein Rückschlagventil gemäß Anspruch 1 gelöst. Bevorzugte Ausführungsformen der vorliegenden Erfindung sind Gegenstand der Unteransprüche.

Es ist somit ein Rückschlagventil vorgeschlagen, dessen Herstellung günstig und dessen Funktionssicherheit in jeder Lage des Ventils und/oder Stellung des die Sperrwirkung erzeugenden Bauteils sets gewährleistet ist, insbesondere auch für den Fall des Ansammelns von Kraftstoffen o. ä. im Bereich des Rückschlagventils.

Das vorgeschlagene Rückschlagventils benötigt zu seiner Funktionsfähigkeit keine Membrane oder Federn. Ebenfalls nicht notwendig ist die Verwendung von Gummiteilen zur Erlangung der angestrebten Sperrwirkung. Auch ist das die Sperrwirkung bewirkende Bauteil, nämlich der Verschlusskörper, frei von jeglichen äusseren und inneren Kräften, d.h. es werden keine Bauteile oder baulichen Ausgestaltungen benötigt, um den Verschlusskörper im Inneren des Ventils zu bewegen, sei es in die Oeffnungsstellung oder in die Sperrstellung oder in eine dazwischen befindliche Stellung. Am Verschlusskörper äusserlich angreifende Kräfte können z.B. in Form einer Feder vorliegen, die bei dem vorgeschlagenen Rückschlagventil eben nicht benötigt wird. Eine im Inneren des Verschlusskörpers erzeugte Kraft, die dessen Lageveränderung unterstützt oder gar bewirkt, kann beispielsweise durch eine Verformung des Verschlusskörpers bedingt werden, die beispielsweise in einer Oeffnungsstellung des Ventils dem Verschlusskörper aufgezwungen wird, um dann die Sperrstellung des Verschlusskörpers zu unterstützen oder gar zu bewirken. Es kann sich hierbei insbesondere um eine im Verschlusskörper erzeugte Verformungsenergie handeln, auf die ebenfalls im Rahmen des vorgeschlagenen Ventils völlig verzichtet werden kann. Unter Einwirkung einer äusseren Kraft wird in diesem Zusammenhang auch die Schwerkraft an sich verstanden, die bei einigen Ventilen erforderlich ist, um die eine oder andere Stellung des Verschlusskörpers überhaupt erreichen zu können. Es versteht sich, dass durch eine solche Ausgestaltung eines Rückschlagventils einerseits die Anzahl der Bauteile des Ventils auf die überhaupt minimal mögliche Anzahl reduziert werden kann. Andererseits wird die Funktionssicherheit des Rückschlagventils immer gewährleistet, auch beispielsweise bei einem Überschlag eines Kraftfahrzeuges, bei welchem ein im Kraftfahrzeug eingebautes Rückschlagventil jede nur erdenkliche Lage einnehmen könnte. Die Bewegung des Verschlusskörpers wird bei dem vorgeschlagenen Rückschlagventil also einzig und allein aufgrund herrschender Druckunterschiede auf der einen bzw. anderen Seite des Verschlusskörpers und die dadurch bedingte Strömung verursacht. Die Druckunterschiede bewirken eine Bewegung des Verschlusskörpers in jeder für den Verschlusskörper nur erdenklichen Stellung und zwar ohne dass es dabei weiterer äusserer auf den Verschlusskörper wirkender Kräfte bedarf oder im Verschlusskörper selbst aufgebauter oder vorhandener innerer Kräfte. Später wird ausgeführt werden, dass der vorgeschlagene Aufbau des Rückschlagventils es u.a. ermöglicht, sämtliche Bauteile des Rückschlagventils aus gleichem oder ähnlichem Material herzustellen, um dadurch eine uneingeschränkte Recyclingfähigkeit des Ventils zu erreichen. Bei dem vorgeschlagenen Rückschlagventil ist es weiterhin von Vorteil, dass der vorgeschlagene Verschlusskörper im Rückschlagventil axial beweglich gelagert ist, wodurch das Verschlusselement zur Sperrung des Rückschlagventils nicht selbst verformt werden muss, wie dies beispielsweise bei der Verwendung von Membranen der Fall ist. Das Rückschlagventil wird im Querschnitt vorzugsweise kreisförmig ausgebildet sein, so dass sich die Dichtkante als ringkreisförmige Anschlagfläche oder Anschlagring ergibt, an welche sich der Verschlusskörper durch seine bewegliche Lagerung dichtend anlegen kann. Ein weiterer Vorteil bei dem vorgeschlagenen Rückschlagventil besteht darin, dass dieses u. a. keine aus Gummi o. ä. Material bestehende Teile aufweist. Die neuen Kraftstoffe sind nämlich zunehmend mit sehr aggressivem MTBE, einem die Verbrennung vergleichmässigenden Methyltertiärbutylether, legiert, der insbesondere Gummi angreift, und somit zu einer beschleunigten Alterung von Rückschlagventilen beiträgt, die aus Gummi bestehende Membrane verwenden. Bei dem vorgeschlagenen Rückschlagventil können die neuen Kraftstoffe keine Schäden mehr verursachen, da der Verschlusskörper erfindungsgemäß trichterförmig oder pilzförmig ausgebildet ist, wobei der trichterförmige bzw. pilzförmige Teil durch Anlage an der Dichtkante das Rückschlagventil schliesst und das rohrförmige Trichterende geschlossen ausgebildet ist. Bei Bewegung des Verschlusskörpers im Rückschlagventil kann auf Grund der entsprechenden Druckverhältnisse der trichterförmige Teil zur Dichtkante hin bewegt werden, um das Rückschlagventil zu schliessen, oder auch von der Dichtkante weg bewegt werden, um das Rückschlagventil zu öffnen. Das rohrförmige Trichterende ist geschlossen ausgebildet, um bei an der Dichtkante anliegendem Verschlusskörper die angestrebte Dichtung zu gewährleisten. Dabei ist es zweckmässig, die Gehäuse so wie auch den Verschlusskörper symmetrisch zur Längsachse der Gehäuse auszubilden, so dass der rohrförmige Teil im Mittelpunkt des trichterförmigen Körpers angeordnet ist. Die trichterförmige Ausgestaltung des Verschlusskörpers hat weiterhin den Vorteil, dass er einen von der Strömungsrichtung abhängigen Widerstand aufweist, so dass die sichere Funktion, d.h. die Bewegung des Verschlusselementes in Längsachsenrichtung der Gehäuse, unterstützt wird. Der trichterförmige Teil hat den zusätzlichen Vorteil, dass im Gegensatz zu flachen Membranen eine eventuelle Quellung lediglich zu einer Veränderung des Trichterwinkels, nicht jedoch zu einem Verwerfen in der Ebene der Dichtungslinie, d.h. der Linie an der der trichterförmige Teil an der Dichtkante anliegt, führt. Eine mögliche Veränderung des Trichterwinkels kann beispielsweise durch ein genügendes Spiel zwischen der Auflage des trichterförmigen Teils und dem Verschlusskörper ausgeglichen werden, wohin hingegen ein Verwerfen in der Ebene der Dichtungslinie zu einer Undichtigkeit in Sperrrichtung führen könnte. Daneben kann durch die vorgeschlagene Ausbildung des Verschlusskörpers, der im Regelfall einen nur geringen Durchmesser aufweist, eine bessere Zentrierung geschaffen werden, als dies beispielsweise bei am äusseren Umfang gelagerten Verschlusskörpern möglich ist.

Mit Vorteil kann der Verschlusskörper entweder am Austrittsgehäuse oder am Eintrittsgehäuse des Rückschlagventils angeordnet werden. Für beide Fälle ist die Beweglichkeit des Verschlusselementes sichergestellt, wobei dessen Bewegung durch die unterschiedlichen Druckverhältnisse im Austrittsgehäuse einerseits und im Eintrittsgehäuse andererseits bedingt wird.

Zur zweckmässigen Anordnung des Verschlusskörpers kann am Austrittsgehäuse oder am Eintrittsgehäuse ein, vorzugsweise in der Längsachse der Gehäuse angeordneter auskragender Zapfen vorgesehen werden. Der Zapfen stellt die Lagesicherung des Verschlusselementes senkrecht zur Längsachse der Gehäuse dar und erlaubt dabei die angestrebte Bewegung des Verschlusskörpers in Längsachsenrichtung der Gehäuse zum Oeffnen bzw. zum Sperren des Rückschlagventils.

Mit Vorteil wird das rohrförmige Trichterende auf dem Zapfen angeordnet. Das rohrförmige Trichterende kann in einfacher Weise auf den Zapfen aufgeschoben werden, wobei die Länge des rohrförmigen Trichterendes und die des Zapfens so aufeinander abgestimmt sind, dass sich der Verschlusskörper zwängungsfrei in die gewünschten Stellungen bewegen kann. Der Innendurchmesser des rohrförmigen Trichterendes entspricht dabei im wesentlichen dem Aussendurchmesser des freien Zapfens, so dass die angestrebte Bewegung des Verschlusskörpers keinesfalls behindert wird. Sollten Flüssigkeiten, z.B. Kraftstoff, in das Innere des Rückschlagventils gelangen und der Verschlusskörper dadurch aufquellen, zeigt sich ein weiterer besonderer Vorteil der vorgeschlagenen Anordnung. Die durch eine mögliche Aufquellung bedingte Aufweitung des Innendurchmessers des rohrförmigen Trichterendes behindert das Verschlussventil nicht in seiner Bewegung. Es versteht sich dabei, dass der freie Zapfen sich durch eine eventuelle Quellung in seinem Durchmesser nicht mehr vergrössern darf als die durch eine eventuelle Quellung verursachte Aufweitung des Innendurchmessers des rohrförmigen Trichterendes, was durch entsprechende Materialwahl und/oder Dimensionierung auf einfache Weise gewährleistet werden kann. Insbesondere kann es bei den durch eine eventuelle Quellung verursachte Dimensionsschwankungen zu keiner Lekage entlang des als Führung dienenden freien Zapfens kommen.

Zweckmässigerweise ist der Bereich neben der Dichtkante als Leiteinrichung ausgebildet. Die Leiteinrichtung dient dabei einer Umlenkung eines in das Eintrittsgehäuse strömenden Mediums, wodurch die Bewegung des Verschlusskörpers in Sperrrichtung unterstützt werden kann. Zwar würde das Rückschlagventil auch ohne diese zusätzliche Ausbildung im Bereich der Dichtkante zuverlässig schliessen, da der Verschlusskörper auf Grund der Druckunterschiede und seiner beweglichen Anordnung in Schliesstellung bewegt werden würde und zusätzlich der trichterförmige Teil gegen die Strömungsrichtung beim Eintritt des Mediums in das Eintrittsgehäuse geneigt ist. Es kann jedoch gewünscht sein, die Bewegung des Verschlusskörpers in Sperrichtung zu unterstützen, was durch die Ausbildung der Leiteinrichtung im Bereich der Dichtkante erreicht werden kann. Dieser Bereich ist dabei so ausgebildet, dass sich eine Umlenkung des Mediums um die Aussenkante des Verschlusskörpers strömungstechnisch so ergibt, dass der Strömungswiderstand in der Durchflussrichtung, d.h. in Richtung des Austrittsgehäuses, kleiner ist als in Sperrichtung, d.h. in Richtung des Eintrittsgehäuses. Ähnlich dem Stator beispielsweise einer Gasturbine wird dabei eine von der Anströmrichtung abhängige Umlenkung des Mediums bewirkt. Strömt das Medium in Sperrrichtung, erfolgt eine Umlenkung in die Gegenrichtung, so dass ein Druckanstieg bzw. der Aufbau einer Druckdifferenz in diesem Bereich entsteht. Dazu ragt der freie Endbereich des trichterförmigen Teils des Verschlusskörpers vorzugsweise in diesen Bereich ein, um die durch die Leiteinrichtung entstehende Druckdifferenz in vorteilhafter Weise auf den Verschlusskörper wirken zu lassen, der diesen unterstützend zur Dichtkante hin bewegt, um das Rückschlagventil zu sperren. Durch den erzeugten Differenzdruck wird beim Durchströmen des Mediums in Sperrichtung ein Druck auf der Trichterinnenseite aufgebaut, welcher den Verschlusskörper unterstützend in Sperrichtung bewegt. Verläuft hingegen die Strömung in Durchlassrichtung, soll durch die Leiteinrichtung der Strömungswiderstand günstigerweise überhaupt nicht, auf jeden Fall lediglich nur gering beeinflusst, d.h. erhöht werden.

Eine zweckmässige Ausbildung des Bereichs neben der Dichtkante als Leiteinrichtung kann durch eine neben der Dichtkante ausgebildete Kammer erfolgen, welche das in diesem Bereich in Richtung des Eintrittsgehäuses strömende Medium um etwa 180 umlenkt, bevor es an der Dichtkante vorbei in das Innere des Eintrittsgehäuses einströmen kann. Die Umlenkung des Mediums erzeugt den gewünschten Druckanstieg bzw. die gewünschte Druckdifferenz. Die Kammer ist zweckmässigerweise zwischen der Dichtkante und dem äusseren Abschluss des Eintrittsgehäuses angeordnet und bei im Querschnitt kreisförmigem Eintrittsgehäuse als kreisringförmige Mulde oder Sicke ausgebildet. Der offene Bereich der Kammer bzw. der Mulde ist dabei zum Austrittsgehäuse und somit zum in Sperrichtung eintretenden Medium gerichtet. Durch diese Ausbildung wird, sofern die Strömung des Mediums in Durchlassrichtung erfolgt, das Medium in dieser Kammer lediglich in Rotation versetzt, wodurch eine Luftwalze entsteht, die sich in Strömungsrichtung dreht und den Strömungswiderstand kaum erhöht.

Wie schon bemerkt, ist es vorteilhaft, die Kammer so auszubilden, dass in Richtung des Austrittsgehäuses strömendes Medium weitgehend ungehindert aus dem Austrittsgehäuse ausströmen kann. Dies kann z.B. dadurch erreicht werden, dass die Dichtkante selbst einen Teil der Kammer bildet und, in Richtung des Austrittsgehäuses gesehen, über den Kammerboden hinausragt, so dass aus dem Eintrittsgehäuse austretendes Medium sich nicht strömungswiderstandserhöhend in der Kammer verfangen kann.

Die Dichtkante ist vorzugsweise als ringförmige Auflagekante für den trichterförmigen Teil ausgebildet. Diese ringförmige Ausbildung bildet einen Ringsitz für das trichterförmige Teil, sobald sich der Verschlusskörper in Sperrstellung befindet. Vorzugsweise ist die ringförmige Auflagekante so ausgebildet, dass sich eine linienförmige Anlage zwischen dem trichterförmigen Teil und der Dichtkante ergibt.

Zweckmässigerweise ist der äussere Durchmesser des freien Randes des trichterförmigen Teils grösser ausgebildet als der Durchmesser der als ringförmige Auflagekante ausgebildeten Dichtkante. Um überhaupt eine Dichtwirkung zu erzielen, ist es ersichtlich, dass der Durchmesser des freien Randes des trichterförmigen Teils zumindest dem der ringförmigen Auflagekante entsprechen muss. Ist der Durchmesser jedoch grösser, kann er, wie bereits erwähnt, in die neben der Dichtkante geordnete Kammer hineinragen, was zum Ausnützen des Effektes der Kammer von Vorteil ist. Dennoch darf der Durchmesser des freien Randes des trichterförmigen Teils ersichtlicherweise nicht dem Innendurchmesser des Eintrittsgehäuses oder des Austrittsgehäuses entsprechen, da sonst eine Durchströmung des Rückschlagventils in der einen oder anderen Richtung nicht mehr möglich wäre.

Um eine Lagesicherung in Oeffnungs- oder Sperrstellung des Verschlusskörpers in Längsachsenrichtung der Gehäuse zu erreichen, sind mit Vorteil Einrichtungen am Austrittsgehäuse sowie am Eintrittsgehäuse zur Anlage des trichterförmigen Teils angeordnet.

Die Einrichtungen bestehen zweckmässigerweise aus radial sich vom Mittelpunkt der Gehäuse weg erstreckenden, voneinander beabstandeten Stegen. Durch die Verwendung von Stegen zur Anlage des Verschlusskörpers bzw. dessen trichterförmigen Teils ist es in beiden Durchflussrichtungen dennoch gewährleistet, dass ein genügend grosser Querschnitt für den Durchtritt des Mediums in beiden Durchstömrichtungen freibleibt.

Zweckmässigerweise sind die als Auflagekanten dienenden, dem trichterförmigen Teil zugewandten freien Kanten der Stege zur Längsachse der Gehäuse geneigt ausgebildet, wobei die Neigung der freien Kanten im wesentlichen der des trichterförmigen Teils entspricht. Die Auflagekanten der Stege des Austrittsgehäuses und des Eintrittsgehäuses sind somit jeweils zum Austrittsgehäuse hin geneigt. Indem ihre Neigung der des trichterförmigen Teils entspricht, kommt es zwischen dem Verschlusskörper und den Stegen zu einer günstigen, den Verschlusskörper nicht verformenden Anlage. Ersichtlicherweise muss bezüglich des Eintrittsgehäuses dafür gesorgt werden, dass durch die Anlage des trichterförmigen Teils an dessen Stegen die dichtende Anlage an der Dichtkante nicht behindert wird.

Ein weiterer bedeutender Vorteil bei dem vorgeschlagenen Rückschlagventil besteht in seiner vollständigen Rückführbarkeit, da dessen Bauteile aus ein und demselben Materialtypus bestehen können, vorzugsweise durch die ausschliessliche Verwendung von Polymeren für die Bauteile des Rückschlagventils. Da für die Leitungen zwischen beispielsweise dem Saugrohr und dem terdruckbremskraftverstärker zunehmend thermoplastische Polymere eingesetzt werden, kann, sofern die Bauteile des vorgeschlagenen Rückschlagventils aus derselben Polymerfamilie bestehen, die Leitung zusammen mit dem Rückschlagventil zurückgeführt werden. Bei herkömmlichen Rohren und herkömmlichen Rückschlagventilen ist dies nicht möglich, da einerseits eine Trennung nur unter erheblichem Aufwand stattfinden kann und andererseits ein Zerlegen der Ventile zur Entnahme von Gummiteilen oder Metallfedern völlig unwirtschaftlich ist. Durch den vorgeschlagenen Aufbau des Rückschlagventils erübrigt sich eben in besonders vorteilhafter Weise die Anordnung einer Feder und/-oder die Verwendung eines Membranmaterials mit elastischem Rückstellvermögen, welches bislang für die Funktion eines Grossteils der bekannten Rückschlagventile erforderlich war.

Mit Vorteil besteht das Polymermaterial sämtlicher Teile des Rückschlagventils aus derselben thermoplastischen Polymerfamilie, was die Rückführbarkeit günstig beeinflusst sowie für die Herstellung vorteilhaft ist. Thermoplastische Polymere sind nur in einem kleinen, für das vorgeschlagene Rückschlagventil jedoch ausreichenden Bereich der Deformation wirklich elastisch. Dies kann hingenommen werden, da es ausreichend ist, wenn der Verschlusskörper lediglich die im Regelfall geringen Unebenheiten des Ring- bzw. Dichtungssitzes, also den Bereich der Dichtkante, ausgleicht. Dabei können dieselben Polymere wie für die Zuleitungen zum Rückschlagventil verwendet werden, was zusätzlich die Rückführung bzw. Recyclefähigkeit fördert.

Zweckmässigerweise können das Eintrittsgehäuse, das Austrittsgehäuse sowie der Verschlusskörper zumindest teilweise aus einem steifen Polymer bestehen, wobei es hierbei zweckmässig ist, die Dichtkante, welche durch Anlage des Verschlusskörpers abdichten muss, aus einem elastischen Polymer auszubilden. Somit können Dimensionsschwankungen durch Quellung unterdrückt werden. Allerdings kann auch lediglich ein peripherer Ringteil des Verschlusskörpers aus elastischem Polymer und die übrigen Teile des Verschlusselements sowie der übrigen Bauteile des Rückschlagventils aus steifem Polymer bestehen.

In der besonderen Ausführung, in der der Verschlusskörper aus einem steifen Polymer und die Dichtkante aus elastischem Polymermaterial hergestellt ist, kann z.B. durch Verbundspritzguss eine elastische Lippe am freien Ende der Dichtkante aufgebracht werden. Ein Verschlusskörper aus einem steifen Polymerwerkstoff ist gegen Quellung unempfindlich. Ebenso kann der Bereich des Verschlusskörpers, welcher letztlich der Abdichtung dient, mittels Verbundspritzguss aus einem elastischen Polymer an den steifen Ventilen angespritzt werden.

Als thermoplastische Polymere können alle handelsüblichen Polyamid-, Polyester- und Polyolefintypen ihre Blends sowie die nach den Anforderungen mit Additiven modifizierten Typen verwendet werden. Dabei sind Polyamide aus der Gruppe PA6, PA6,6, PA6,9, PA6,10, PA11, PA12, PA12,12 und Polyester vom Typ PET und PBT besonders bevorzugt.

Das erfindungsgemässe Rückschlagventil wird nachfolgend anhand von bevorzugten Ausführungsformen näher beschrieben. Es zeigen dabei:
- Fig. 1: einen Querschnitt durch ein in Oeffnungsstellung befindliches Rückschlagventil
- Fig. 2: einen Querschnitt gemäss Fig. 1, jedoch in Sperrstellung
- Fig. 3: einen Querschnitt lediglich durch das Austrittsgehäuse
- Fig. 4: einen Querschnitt durch den Verschlusskörper
- Fig. 5: einen Querschnitt lediglich durch das Eintrittsgehäuse
- Fig. 6: eine Draufsicht auf die Innenseite des Eintrittsgehäuses
- Fig. 7: eine Draufsicht auf die Innenseite des Austrittsgehäuses
- Fig. 8: Strömungsverhältnisse im Bereich der Dichtkante bei einer Strömung in Durchlassrichtung
- Fig. 9: Strömungsverhältnisse im Bereich der Dichtkante bei einer Strömung in Sperrichtung
- Fig. 10: die Sperrstellung des Verschlusskörpers im in den Fig. 8 und 9 gezeigten Bereich
- Fig. 11: einen Querschnitt im Bereich der Dichtkante durch eine andere Ausführungsform des Rückschlagventils und
- Fig. 12: eine weitere Ausführungsform eines Rückschlagventils im Querschnitt

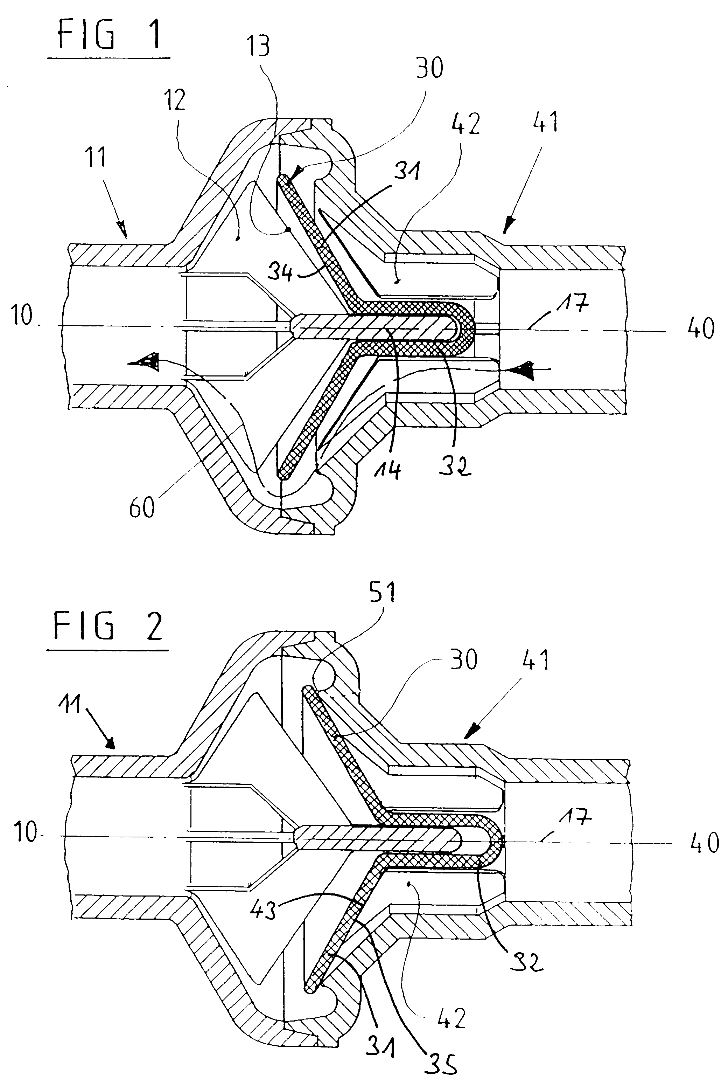

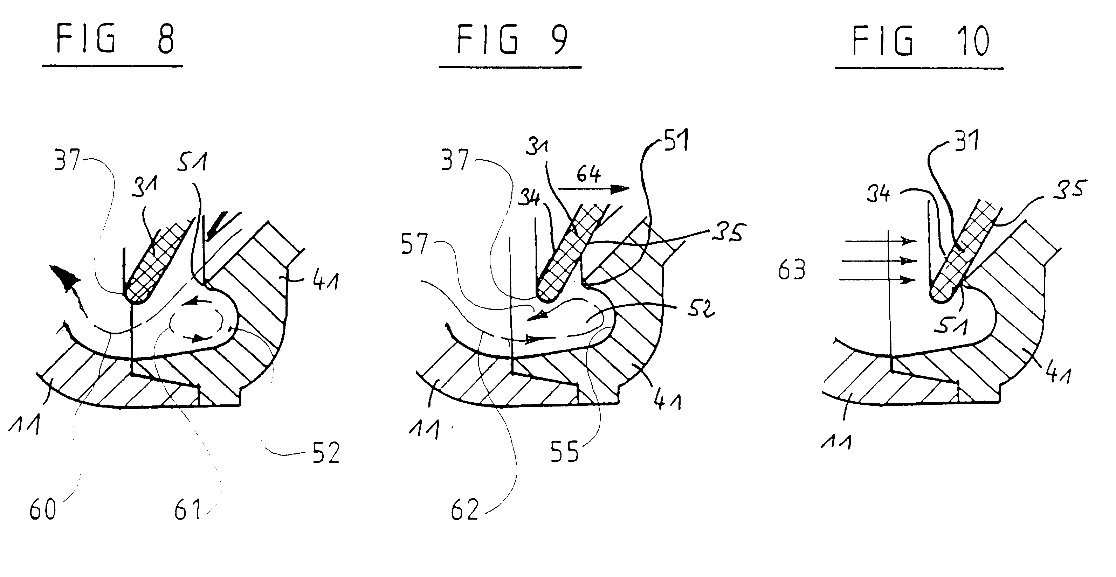

Das in Figur 1 im Querschnitt gezeigte Rückschlagventil besteht im wesentlichen aus einem Austrittsgehäuse 11, einem Eintrittsgehäuse 41 sowie einem Verschlusskörper 30. Austrittsgehäuse 11 und Eintrittsgehäuse 41 sind miteinander gasdicht verbunden. Das Rückschlagventil ist in der Oeffnungsstellung gezeigt, so dass vom Strömungseintritt 40 her eine Strömung 60 in Durchlassrichtung zum Strömungsaustritt 10 hin durch das Rückschlagventil gelangen kann. Auf der Seite des Strömungseintrittes 40 könnte beispielsweise ein Vakuum gewünscht sein, wobei die Strömung 60 andeutet, dass zur Erhöhung des Vakuums Medium aus dem Bereich des Strömungseintrittes 40 zum Bereich des Strömungsaustrittes 10 abgeführt wird. Dazu muss sich ersichtlicherweise das Rückschlagventil in einer Oeffnungsstellung befinden. Der Verschlusskörper 30 besteht aus einem trichterförmigen Teil 31, welches am freien Ende offen ausgebildet ist, und einem am verjüngenden Endbereich des trichterförmigen Teils 31 angeordneten rohrförmigen Trichterende 32. Zur Bewegung des Verschlusskörpers in Richtung der Längsachse 17 der Gehäuse 11, 41 ist das an seinem Ende geschlossene rohrförmige Trichterende 32 auf einen Zapfen 14 aufgeschoben, der am Austrittsgehäuse 11 angeordnet ist. Der Aussendurchmesser des Zapfens 14 entspricht dabei im wesentlichen dem Innendurchmesser des rohrförmigen Trichterendes 32. In der maximalen Oeffnungsstellung verbleibt vorzugsweise zwischen dem freien Ende des Zapfens 14 und dem verschlossenen Endbereich des rohrförmigen Trichterendes 32 ein kleiner Spalt, so dass die Bewegung des Verschlusskörpers 30 zum Austrittsgehäuse 11 hin nicht behindert werden kann. Eine Begrenzung der maximalen Oeffnungsstellung des Verschlusskörpers 30 zum Austrittsgehäuse 11 hin wird durch in diesem angeordnete Stege 12 bedingt. Die Anordnung der Stege 12 ist insbesondere auch aus Figur 7 ersichtlich. Die Stege 12 erstrecken sich radial vom Mittelpunkt des Austrittsgehäuses 11 weg, sind voneinander beabstandet und am Zapfen 14 angeordnet. Deren zum trichterförmigen Teil 31 zugewandten freien Enden dienen als Auflagekanten 13 für die Innenseite 34 des trichterförmigen Teils 31. Die Auflagekanten 13 sind zur Längsachse 17 in Richtung des Austrittsgehäuses 11 hin geneigt und entsprechen in ihrer Neigung der des trichterförmigen Teils 31. Auf Grund der Schnittführung in Figur 1 ist es nicht ohne weiteres ersichtlich, dass in der maximalen Oeffnungsstellung des Verschlusskörpers 30 der trichterförmige Teil 31 dicht an den Auflagekanten 13 anliegt. Damit die Strömung 60 am Verschlusskörper 30 zum Austrittsgehäuse 11 hindurchtreten kann, ist der Aussendurchmesser des trichterförmigen Teils 31 kleiner als der maximale Innendurchmesser der Gehäuse 11, 41, so dass die Strömung 60 zwischen dem freien Rand des Verschlusskörpers 30 und der Innenwandung der Gehäuse 11, 41 hindurchtreten kann.

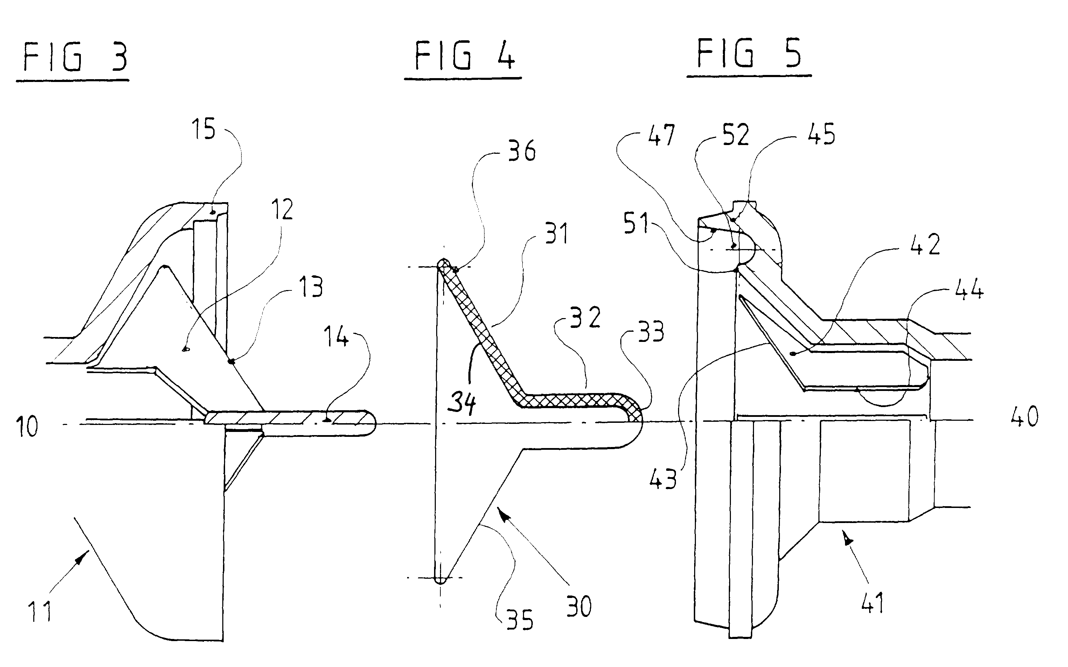

Figur 2 zeigt den Verschlusskörper 30 in Sperrstellung, in welcher kein Durchfluss zwischen Strömungsaustritt 10 und Strömungseintritt 40 stattfinden kann. Dazu legt sich die Aussenseite des trichterförmigen Teil 31 an den Innenumfang des Eintrittsgehäuses 41 und dort an eine Dichtkante 51 an. Die Dichtkante 51 ist insbesondere aus Figur 5 ersichtlich. Die Dichtkante 51 ist bei Anlage des trichterförmigen Teils 31 in der Nähe von dessen freiem Endbereich angeordnet. Vorzugsweise ist der Aussendurchmesser des trichterförmigen Teils 31 so ausgebildet, dass er über die Dichtkante 51 hinausragt. Zur Abstützung des zwischen der Dichtkante 51 und dem rohrförmigen Trichterende 32 befindlichen Bereichs des trichterförmigen Teils 31 wird dieser wiederum an seiner Aussenseite durch am Eintrittsgehäuse 41 angeordnete Stege 42 abgestützt. Die Stege 42 sind im wesentlichen wie die Stege 12 ausgebildet und weisen dazu insbesondere wiederum der Neigung des trichterförmigen Teils 31 angepasste freie Kanten als Auflagekanten 43 auf und sind voneinander beabstandet. Die Anlage des trichterförmigen Teils 31 an der Dichtkante 51 sorgt dafür, dass beispielsweise ein am Strömungsaustritt 10 herrschender Überdruck nicht zum Strömungseintritt 40 gelangen kann, wenn in dessen Bereich ein Unterdruck bzw. ein Vakuum vorherrscht.

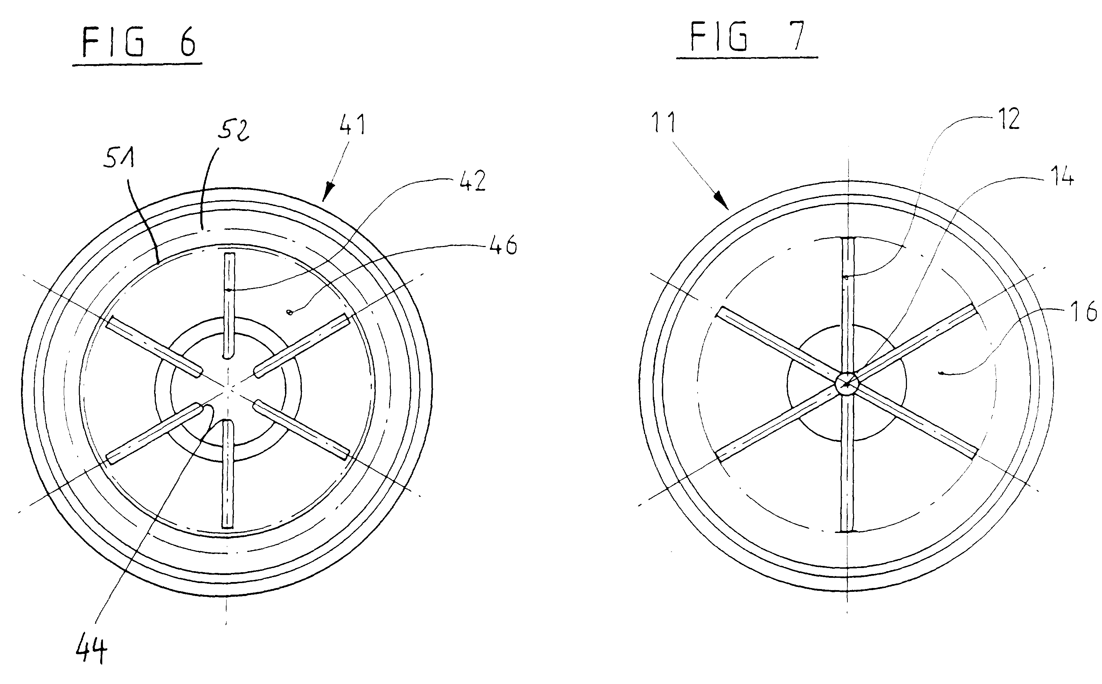

Die Figuren 3 bis 5 zeigen jeweils einzeln den Aufbau des Austrittsgehäuses 11, des Verschlusskörpers 30 und des Eintrittsgehäuses 41, während die Figuren 6 und 7 Draufsichten auf den Innenbereich des Eintrittsgehäuses 41 einerseits und des Austrittsgehäuses 11 andererseits zeigen. Zweckmässigerweise ist das Rückschlagventil im Querschnitt zu dessen Längsachse 17 kreisförmig ausgebildet, wie es insbesondere aus den Figuren 6 und 7 hervorgeht.

Figur 3 zeigt die an dem als auskragendes Element ausgebildeten Zapfen 14 angeordneten Stege 12 des Austrittsgehäuses 11 und ihre schräg verlaufenden, als Auflagekanten 13 dienenden freien Endbereiche. Das Gehäuse 11 ist so ausgelegt, dass es in einem Spritzgiessprozess mit einfachem Werkzeug in einem Prozesschritt hergestellt werden kann. Die abgestufte Stossverbindung 15 wird so ausgelegt, dass sie mittels Rotations- oder Ultraschallschweissen oder einem anderen geeigneten Verfahren mit dem Eintrittsgehäuse 41 gasdicht verbunden werden kann.

Figur 4 zeigt den Verschlusskörper 30 mit seinem trichterförmigen Teil 31 und dem einstückig daran angeordneten rohrförmigen Trichterende 32, welches an seinem freien Ende 33 verschlossen ist. Das trichterförmige Teil 31 wird auf den Zapfen 14 aufgeschoben, wobei in der maximalen Oeffnungsstellung die Innenseite 34 des trichterförmigen Teils 31 dicht an den Auflagekanten 13 der Stege 12 anliegt. Im äusseren Randbereich des trichterförmigen Teils 31 befindet sich eine umlaufende Dichtungskontaktlinie 36, die in der Sperrstellung des Verschlusskörpers 30 den Anlagebereich der Aussenseite 35 des trichterförmigen Teils 31 an der Dichtkante 51 darstellt und insoweit ringförmig ausgebildet ist. In der Sperrstellung des Verschlusskörpers 30 legt sich die Aussenseite 35 des trichterförmigen Teils 31 in entsprechender Weise an den Auflagekanten 43 der Stege 42 des Eintrittsgehäuses 41 an. Die Auflagekanten 43 der Stege 42 liegen, zur Längsachse 17 hin gesehen, unterhalb der Dichtkante 51 und stützen den trichterförmigen Teil 31 bei grosser Druckbeaufschlagung zusätzlich ab.

Figur 5 zeigt das Eintrittsgehäuse 41 mit den Stegen 42 und deren Auflagekanten 43. In der Fortsetzung der Stege 42 zum Strömungseintritt 40 hin belassen die hinter den Auflagekanten 43 in Richtung der Längsachse 17 verlaufenden Innenkanten 44 der Stege 42 einen Raum, welcher grösser ist als der Aussendurchmesser des rohrförmigen Trichterendes 32 des Verschlusskörpers 30, so dass dieser ausschliesslich von dem Zapfen 14 geführt ist. Die Dichtkante 51 ist als ringförmige Auflagekante für den trichterförmigen Teil 31 ausgebildet und stellt somit eine Art Ringsitz für den Verschlusskörper 30 dar. Um u.a. eine gute Dichtwirkung zu erzielen, ist der Durchmesser der als ringförmige Auflagekante ausgebildeten Dichtkante 51 kleiner als der äussere Durchmesser des trichterförmigen Teils. Folglich befindet sich die Dichtungskontaktlinie 36 am trichterförmigen Teil 31 etwas von dessen freiem Rand 37 entfernt auf der Aussenseite 35. Die Dichtkante 51 ist im Verhältnis zu den Auflagekanten 43 so angeordnet, dass sich zunächst eine sichere Anlage der Dichtungskontaktlinie 36 an der Dichtkante 51 ergibt, bevor sich die Aussenseite 35 an den Anlagekanten 43 anlegt. Nach aussen schliesst sich an die Dichtkante 51 eine Kammer 52 an, die bogenförmig ausgebildet ist und von der Dichtkante 51 aus nach aussen gesehen zunächst zurückspringt, um eine Art ringförmige Sicke zu bilden. Die Dichtkante 51 bildet mit der Kammer 52 zusammen einen Stator zur Umlenkung einer zum Eintrittsgehäuse 41 gerichteten Strömung. Die sich in diesem Bereich ergebenden Strömungsverhältnisse werden später anhand der Figuren 8 bis 10 näher erläutert. Auch das Eintrittsgehäuse 41 ist so ausgelegt, dass es im Spritzgiessverfahren an einem Prozesschritt herstellbar ist, wobei dessen Stossverbindung 45 zum Zusammenbau des Eintrittsgehäuses 41 mit dem Austrittsgehäuse 11 entsprechend der Stossverbindung 15 ausgelegt ist.

Figur 6 zeigt in der Draufsicht auf die Innenseite des Eintrittsgehäuses 41 die Beabstandung der Stege 42 zueinander. Eine aus dem Eintrittsgehäuse 41 austretende Strömung kann durch die zwischen den Stegen 42 freibleibenden Räume 46 am Verschlusskörper 30 vorbei zum Austrittsgehäuse 11 gelangen. Die Innenkanten 44 der Stege 42 sind von der Längsachse 17 beabstandet, so dass der Zapfen 14 mit dem rohrförmigen Teil 32 ungehindert in diesen Bereich hineinragen kann.

Figur 7 zeigt die Draufsicht auf die Innenseite des Austrittsgehäuses 11, wobei auch hier durch die Beabstandung der Stege 12 zueinander Räume 16 frei bleiben. In der Oeffnungsstellung des Rückschlagventils wird der freie Rand 37 des trichterförmigen Teil 31 etwa im Bereich der freien Enden der Stege 12 anliegen, wobei eine aus dem Eintrittsgehäuse 41 austretende Strömung durch die Beabstandung der Gehäuseinnenwand von den freien Enden der Stege 12 am trichterförmigen Teil 31 vorbei durch die Räume 16 in das Austrittsgehäuse 11 eintreten kann.

Figur 8 zeigt den Verlauf der in Durchlassrichtung zum Austrittsgehäuse 11 gerichteten Strömung 60 im Bereich der Kammer 52 und dem freien Rand 37 des trichterförmigen Teils 31. Die Strömung 60 wird durch die Kammer 52 nicht behindert, da deren offenes Ende zur Strömungsrichtung der Strömung 60 weist, wodurch das in der Kammer 52 befindliche Medium lediglich umgewälzt wird, wie es durch die Strömungspfeile 61 angedeutet ist.

Figur 9 zeigt den der Figur 8 entsprechenden Bereich bei einer in Sperrichtung verlaufenden Strömung 62 in dem Moment, indem der Verschlusskörper 30 sich noch in der Oeffnungsstellung befindet, d.h. der trichterförmige Teil 31 noch nicht an der Dichtkante 51 dichtend anliegt. Die Strömung 62 tritt in die Kammer 52 ein und wird dort an der Innenwandung 55 der Kammer 52 um etwa 180° umgelenkt, wie dies durch die Strömung 57 angedeutet ist. Diese Statorwirkung der Kammer 52 erzeugt in diesem Bereich eine Druckdifferenz, die sich auf den freien Rand 37 des trichterförmigen Teils 31 auswirkt, da der freie Randbereich des trichterförmigen Teils 31 in den Strömungsbereich der Kammer 52 hineinragt. Die Druckdifferenz erzeugt ein Druckgefälle zwischen der Innenseite 34 und der Aussenseite 35 des trichterförmigen Teils 31, wodurch dieses in Richtung des Druckgefälles zum kleineren Druck hin, d.h. zum Eintrittsgehäuse 41 hin, bewegt wird, wie dies durch den Pfeil 64 angedeutet ist. Die Kammer 52, die mit ihrem offenen Ende zur eintretenden Strömung 62 in Sperrrichtung gerichtet ist, unterstützt somit die Schliessbewegung des Verschlusskörpers 30 durch die Statorwirkung der Kammer 52.

Figur 10 zeigt schliesslich wiederum den der Figuren 8 und 9 entsprechenden Bereich, wobei sich der Verschlusskörper 30 bzw. das trichterförmige Teil 31 in dichtender Anlage an der Dichtkante 51 befindet. Der Druckunterschied zwischen der austrittsgehäuseseitigen Innenseite 34 und der eintrittsgehäuseseitigen Aussenseite 35 des Verschlusskörpers 30 erzeugt eine zum Eintrittsgehäuse 41 gerichtete Kraftkomponente, die durch die Pfeile 63 angedeutet ist und den Verschlusskörper 30 in der Sperrstellung festhält.

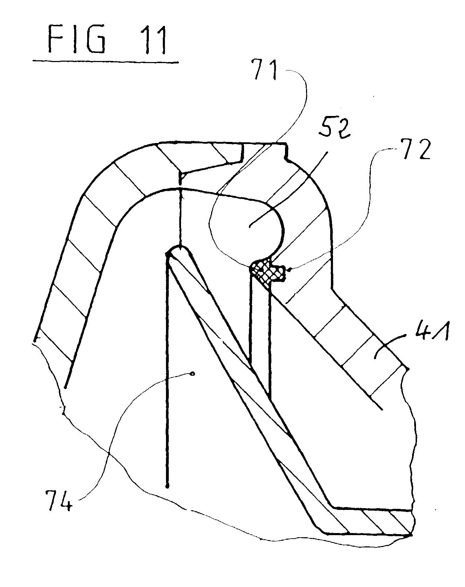

Figur 11 zeigt im Querschnitt eine andere Ausführungsform des erfindungsgemässen Rückschlagventils und zwar im Bereich der Kammer 52. Der hier gezeigte Verschlusskörper 74 ist aus einem steifen, nicht elastomeren Material gefertigt. Die entsprechende Dichtkante 71 hingegen besteht aus einem elastischen Material unterschiedlich zu dem Material des Eintrittsgehäuses 41. Die elastische Dichtkante 71 ist in eine Nut 72 des Eintrittsgehäuses 41 eingesetzt und sorgt bei an ihr anliegendem Verschlusskörper 74 für die angestrebte dichtende Wirkung in Sperrstellung des Verschlusskörpers 74. Es sind Verfahren bekannt, mit denen das Anbringen der Dichtkante 71 in einem Spritzgiessprozess zusammen mit der Herstellung des Eintrittsgehäuses 41 ohne zusätzliches Handling möglich ist. Die Nut 72 erhöht dabei die Kontaktfläche der Materialien der elastischen Dichtkante 71 sowie des Eintrittsgehäuses 41 und ergibt zudem einen Formschluss.

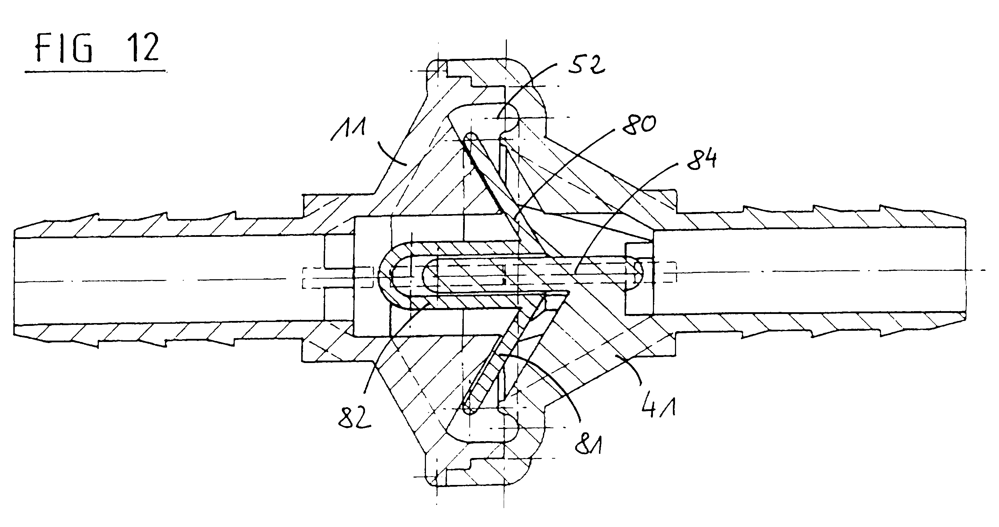

Schliesslich zeigt Figur 12 eine weitere Variante des erfindungsgemässen Rückschlagventils. Das Rückschlagventil gemäss Figur 12 entspricht im wesentlichen dem in den Figuren 1 bis 10 gezeigten Rückschlagventil. In dieser Ausführungsform ist der Zapfen 84 aber nicht am Austrittsgehäuse 11, sondern am Eintrittsgehäuse 41 angeordnet. In entsprechender Weise ist das geschlossene Ende 83 des rohrförmigen Trichterendes 82 des Verschlusskörpers 80 zum Austrittsgehäuse 11 hin gerichtet, um mit seinem offenen Ende auf den Zapfen 84 aufgesetzt werden zu können. Der Verschlusskörper 80 stellt sich bei dieser Ausführungsform im Querschnitt nicht mehr trichterförmig - wie dies beim Verschlusskörper 30 der Fall ist - dar, sondern als pilzförmiger Körper. Im übrigen entspricht die Funktionsweise des Rückschlagventils gemäss Figur 12 dem des in den Figuren 1 bis 10 gezeigten Rückschlagventils, wobei auch hier insbesondere die, eine Statorwirkung erzeugende Kammer 52 vorgesehen ist.

### Bezugszeichenliste

- 10: Strömungsaustritt
- 11: Austrittsgehäuse
- 12: Steg
- 13: Auflaaekante
- 14: Zapfen
- 15: Stossverbindung
- 16: Raum
- 17: Länasachse
- 30: Verschlusskörper
- 31: trichterförmiger Teil
- 32: rohrförmiges Trichterende
- 33: geschlossenes Ende
- 34: Innenseite
- 35: Aussenseite
- 36: Dichtungskontaktlinie
- 37: freier Rand
- 40: Strömungseintritt
- 41: Eintrittsgehäuse
- 42: Steg
- 43: Auflagekante
- 44: Innenkante
- 45: Stossverbinduna
- 46: Raum
- 47: Innenwand
- 51: Dichtkante
- 52: Kammer
- 54: Pfeil (Strömungsumwälzung)
- 55: Innenwanduna
- 57: Strömung
- 60: Strömung (Durchlassrichtung)
- 61: Strömungspfeil
- 62: Strömuna (Sperrichtung)
- 63: Pfeil (Kraftkomponente)
- 64: Pfeil
- 71: elastische Dichtkante
- 72: Nut
- 74: Verschlusskörper
- 80: VerschlusskörDer
- 81: trichterförmiger Teil
- 82: rohrförmiges Trichterende
- 83: geschlossenes Ende
- 84: Zapfen

## Patentansprüche

1. Membran- und federloses Rückschlagventil für insbesondere gasförmige Medien mit einem Eintrittsgehäuse (41), einem Austrittsgehäuse (11) sowie einem dazwischen angeordneten Verschlußkörper (30; 74; 80), der axial (14) beweglich geführt, in jeder beliebigen Stellung druckbeaufschlagbar und ausschließlich aufgrund eines unterschiedlichen Drucks zwischen Ein- (41) und Austrittsgehäuse (11) in Sperrstellung gegen eine Dichtkante (51; 72) am Eintrittsgehäuse und in Durchlaßstellung von der Dichtkante (51; 72) weg bewegbar ist,
dadurch gekennzeichnet, daß
der Verschlußkörper (30; 74; 80) einen trichterförmigen oder pilzförmigen Teil (31; 81), der mit der Dichtkante (51;72) zusammenwirkt, und ein rohrförmig geschlossenes Teil (32; 82) aufweist.

2. Rückschlagventil nach Anspruch 1, bei welchem der Verschlußkörper (30) zwangsweise axial geführt ausgebildet ist.

3. Rückschlagventil nach Anspruch 1 oder 2, bei welchem der Bereich des Verschlußkörpers (30) für dessen Führung und der Bereich des Verschlußkörpers (30) zum Sperren des Rückschlagventils voneinander unabhängig ausgebildet sind.

4. Rückschlagventil nach einem der Ansprüche 1 bis 3, bei welchem der Verschlußkörper (30) am Austrittsgehäuse (11) oder am Eintrittsgehäuse (41) angeordnet ist.

5. Rückschlagventil nach Anspruch 1 oder 4, bei welchem das Austrittsgehäuse (11) oder das Eintrittsgehäuse (41) zur Anordnung des Verschlußkörpers (30) einen vorzugsweise in der Längsachse (17) der Gehäuse (11, 41) angeordneten auskragenden Zapfen (14) aufweisen.

6. Rückschlagventil nach Anspruch 5 bei welchem das rohrförmig geschlossene Teil (32) auf dem Zapfen (14) angeordnet ist.

7. Rückschlagventil nach einem der Ansprüche 1 bis 6, bei welchem der Bereich neben der Dichtkante (51) als Leiteinrichtung ausgebildet ist.

8. Rückschlagventil nach Anspruch 7, bei welchem neben der Dichtkante (51) eine Kammer (52) ausgebildet ist, welche das in diesem Bereich in Richtung des Eintrittsgehäuses (41) strömende Medium (62) um etwa 180° umlenkt (57), bevor es an der Dichtkante (51) vorbeiströmt.

9. Rückschlagventil nach Anspruch 8, bei welchem die Kammer (52) so ausgebildet ist, daß in Richtung des Austrittsgehäuses (11) strömendes Medium (60) weitgehend ungehindert aus dem Eintrittsgehäuse (41) ausströmen kann.

10. Rückschlagventil nach einem der Ansprüche 8 oder 9, bei welchem die Kammer (52) aus einer ringkreisförmigen Mulde oder Sicke gebildet ist.

11. Rückschlagventil nach einem der Ansprüche 1 bis 10, bei welchem die Dichtkante (51) als ringförmige Auflagekante für den trichterförmigen Teil (31 ausgebildet ist.

12. Rückschlagventil nach einem der Ansprüche 1 bis 11, bei welchem der äussere Durchmesser des freien Randes (37) des trichterförmigen Teils (31) größer ist als der Durchmesser der als ringförmige Auflagekante ausgebildeten Dichtkante (51).

13. Rückschlagventil nach einem der Ansprüche 1 bis 11, bei welchem der maximale Innendurchmesser der Gehäuse (11, 41) größer ist als der Aussendurchmesser des trichterförmigen Teils (31).

14. Rückschlagventil nach einem der Ansprüche 1 bis 13, bei welchem am Austrittsgehäuse (11) sowie am Eintrittsgehäuse (41) Einrichtungen (12, 42) zur Anlage des trichterförmigen Teils (31) angeordnet sind.

15. Rückschlagventil nach Anspruch 14, bei welchem die Einrichtungen aus radial sich vom Mittelpunkt der Gehäuse (11, 41) weg erstreckenden, voneinander beabstandeten Stegen (12, 42) bestehen.

16. Rückschlagventil nach Anspruch 15, bei welchem die als Auflagekanten (13, 43) dienenden, dem trichterförmigen Teil (31) zugewandten freien Kanten der Stege (12, 14) zur Längsachse (17) der Gehäuse (11, 41) geneigt ausgebildet sind, wobei die Neigung der freien Kanten im wesentlichen der des trichterförmigen Teils (31) entspricht.

17. Rückschlagventil nach einem der Ansprüche 1 bis 16, bei welchem sämtliche Teile aus Polymeren bestehen.

18. Rückschlagventil nach Anspruch 17, wobei das Polymermaterial aus derselben thermoplastischen Polymerfamilie stammt.

19. Rückschlagventil nach einem der Ansprüche 1 bis 18, wobei Eintrittsgehäuse (41), Austrittsgehäuse (11) und Verschlußkörper (30) zumindest teilweise aus einem steifen Polymer bestehen.

20. Rückschlagventil nach einem der Ansprüche 1 bis 18, wobei die Dichtkante (51) und/oder der Verschlußkörper (30) zumindest teilweise aus einem elastischen Polymer bestehen.

21. Rückschlagventil nach einem der Ansprüche 1 bis 20, wobei die Polymerfamilie aus der Gruppe der Polyamide, Polyolefine oder Polyester ausgewählt ist.

22. Rückschlagventil nach Anspruch 19, wobei das steife Polymer aus der Gruppe Polyethylenterephthalat und Polybutylenterephthalat ausgewählt ist.

23. Rückschlagventil nach Anspruch 19, wobei das steife Polymer aus der Gruppe PA6, PA6,6, PA6,10, PA11, PA12, PA12,12 ausgewählt ist.

24. Rückschlagventil nach Anspruch 20, wobei das elastische Polymer aus der Gruppe Polyetheramide, Polyetheresteramide und Polyetheresteretheramide ausgewählt ist.

## Claims

1. Diaphragm- and spring-less check valve for gaseous media in particular, having an inlet housing (41), an outlet housing (11) and, arranged in between, a closure body (30; 74; 80) which is guided axially (14) movably, can be subjected to pressure in any desired position and, exclusively on the basis of a pressure difference between inlet housing (41) and outlet housing (11), can be moved against a sealing edge (51; 72) on the inlet housing when in the blocking position and away from the sealing edge (51; 72) when in the through-flow position, characterized in that the closure body (30; 74; 80) has a funnel-shaped or mushroom-shaped part (31; 81), which interacts with the sealing edge (51; 72), and a tubularly closed part (32; 82).

2. Check valve according to Claim 1, in which the closure body (30) is designed such that it is positively guided axially.

3. Check valve according to Claim 1 or 2, in which the region of the closure body (30) for guiding the check valve and the region of the closure body (30) for blocking the check valve are designed such that they are independent of each other.

4. Check valve according to one of Claims 1 to 3, in which the closure body (30) is arranged on the outlet housing (11) or on the inlet housing (41).

5. Check valve according to Claim 1 or 4, in which the outlet housing (11) or the inlet housing (41) have for arranging the closure body (30) a protruding pin (14), preferably arranged in the longitudinal axis (17) of the housings (11, 41).

6. Check valve according to Claim 5, in which the tubular closed part (32) is arranged on the pin (14).

7. Check valve according to one of Claims 1 to 6, in which the region next to the sealing edge (51) is designed as a directing means.

8. Check valve according to Claim 7, in which there is formed next to the sealing edge (51) a chamber (52), which deflects (57) the medium (62) flowing in this region in the direction of the inlet housing (41) by about 180° before it flows past the sealing edge (51).

9. Check valve according to Claim 8, in which the chamber (52) is designed such that medium (60) flowing in the direction of the outlet housing (11) can flow out of the inlet housing (41) largely unhindered.

10. Check valve according to one of Claims 8 or 9, in which the chamber (52) is formed by an annular depression or bead.

11. Check valve according to one of Claims 1 to 10, in which the sealing edge (51) is designed as an annular bearing edge for the funnel-shaped part (31).

12. Check valve according to one of Claims 1 to 11, in which the outer diameter of the free rim (37) of the funnel-shaped part (31) is greater than the diameter of the sealing edge (51) designed as an annular bearing edge.

13. Check valve according to one of Claims 1 to 11, in which the maximum inside diameter of the housings (11, 41) is greater than the outside diameter of the funnel-shaped part (31).

14. Check valve according to one of Claims 1 to 13, in which there are arranged on the outlet housing (11) and on the inlet housing (41) means (12, 42) for bearing the funnel-shaped part (31).

15. Check valve according to Claim 14, in which the means comprise spaced-apart legs (12, 42) extending radially away from the centre point of the housings (11, 41).

16. Check valve according to Claim 15, in which the free edges of the legs (12, 14), facing the funnel-shaped part (31) and serving as bearing edges (13, 43), are designed such that they are inclined with respect to the longitudinal axis (17) of the housings (11, 41), the inclination of the free edges corresponding substantially to that of the funnel-shaped part (31).

17. Check valve according to one of Claims 1 to 16, in which all the parts consists of polymers.

18. Check valve according to Claim 17, the polymer material originating from the same thermoplastic polymer family.

19. Check valve according to one of Claims 1 to 18, inlet housing (41), outlet housing (11) and closure body (30) consisting at least partially of a rigid polymer.

20. Check valve according to one of Claims 1 to 18, the sealing edge (51) and/or the closure body (30) consisting at least partially of a flexible polymer.

21. Check valve according to one of Claims 1 to 20, the polymer family being selected from the group of polyamides, polyolefins or polyesters.

22. Check valve according to Claim 19, the rigid polymer being selected from the group of polyethylene terephthalate and polybutylene terephthalate.

23. Check valve according to Claim 19, the rigid polymer being selected from the group of PA6, PA6,6, PA6,10, PA11, PA12, PA12,12.

24. Check valve according to Claim 20, the flexible polymer being selected from the group of polyether amides, polyether ester amides and polyether ester ether amides.

## Revendications

1. Soupape de retenue à membrane et sans ressort, en particulier pour des milieux gazeux, comportant un corps d'entrée (41), un corps de sortie (11) ainsi qu'un obturateur (30; 74; 80) disposé entre ceux-ci, guidé avec une mobilité axiale (14), susceptible d'être sollicité par une pression en une position quelconque, et déplaçable exclusivement du fait d'une différence de pression agissant entre le corps d'entrée (41) et le corps de sortie (11), pour prendre la position de blocage contre une arête d'étanchéité (51; 72) sur le corps d'entrée et prendre une position de passage, dans laquelle l'obturateur est écarté de l'arête d'étanchéité (51; 72), caractérisée en ce que l'obturateur (30, 74, 80) est une pièce en forme d'entonnoir ou en forme de champignon (31; 81) qui coopère avec l'arête d'étanchéité (51; 72) et présente une partie (32; 82) fermée, tubulaire.

2. Soupape de retenue selon la revendication 1, dans laquelle l'obturateur est réalisé de façon à être guidé axialement de façon contrainte.

3. Soupape de retenue selon la revendication 1 ou 2, dans laquelle la zone de l'obturateur (30) destinée à son guidage et la zone de l'obturateur (30) destinée au blocage de la soupape de retenue l'obturateur sont indépendantes l'une de l'autre.

4. Soupape de retenue selon l'une des revendications 1 à 3, dans laquelle l'obturateur (30) est disposé sur le corps d'entrée (11) ou sur le corps de sortie (41).

5. Soupape de retenue selon la revendication 1 ou 4, dans laquelle le corps de sortie (11) ou le corps d'entrée (41) présente pour disposer l'obturateur (30) un tourillon (14) faisant saillie, disposé de préférence dans l'axe longitudinal du corps (11, 41).

6. Soupape de retenue selon la revendication 5, dans laquelle la partie fermée tubulaire (32) est disposée sur le tourillon (14).

7. Soupape de retenue selon l'une des revendications 1 à 6, dans laquelle la zone située à côté de l'arête d'étanchéité (51) est réalisée sous forme de dispositif directeur.

8. Soupape de retenue selon la revendication 7, dans laquelle à côté de l'arête d'étanchéité (51) est réalisée une chambre (52) qui dévie d'environ 180° le milieu (62) s'écoulant dans cette zone en direction (41), avant qu'il passe sur l'arête d'étanchéité (51).

9. Soupape de retenue selon la revendication 8, dans laquelle la chambre (52) est réalisée de manière que du milieu (60), qui s'écoule dans la direction du corps de sortie (11), peut sortir du corps d'entrée (41) de façon notablement non entravée.

10. Soupape de retenue selon l'une des revendications 8 ou 9, dans laquelle la chambre (52) est constituée d'une auge ou d'une cannelure en forme d'anneau de cercle.

11. Soupape de retenue selon l'une des revendications 1 à 10, dans laquelle l'arête d'étanchéité (51) est réalisée sous forme d'arête de pose annulaire pour la partie (31) en forme d'entonnoir.

12. Soupape de retenue selon l'une des revendications 1 à 11, dans laquelle le diamètre extérieur du bord libre (37) de la partie (31) en forme d'entonnoir est supérieur au diamètre de l'arête d'étanchéité (51) réalisée sous forme d'arête de pose annulaire.

13. Soupape de retenue selon l'une des revendications 1 à 11, dans laquelle le diamètre intérieur maximal du corps (11, 41) est supérieur au diamètre extérieur de la partie (31) en forme d'entonnoir.

14. Soupape de retenue selon l'une des revendications 1 à 13, dans laquelle des dispositifs (12, 42) destinés à assurer l'appui de la partie (31) en forme d'entonnoir sont disposés sur le corps de sortie (11) ainsi que sur le corps d'entrée (41).

15. Soupape de retenue selon la revendication 14, dans laquelle les dispositifs sont constitués de nervures (12, 42) espacées les unes des autres, s'écartant radialement depuis le centre des corps (11, 41).

16. Soupape de retenue selon la revendication 14, dans laquelle les arêtes libres servant d'arêtes de pose (13, 43), tournées vers la partie (31) en forme d'entonnoir, des nervures (12, 14) sont inclinées par rapport à l'axe longitudinal (17) des corps (11, 41), l'inclinaison des arêtes libres correspondant sensiblement à celles de la partie (31) en forme d'entonnoir.

17. Soupape de retenue selon l'une des revendications 1 à 16, dans laquelle l'ensemble des parties sont en polymères.

18. Soupape de retenue selon la revendication 17, dans laquelle le matériau polymère provenant de la même famille de polymères thermoplastiques.

19. Soupape de retenue selon l'une des revendications 1 à 16, dans laquelle le corps d'entrée (41), le corps de sortie (11) et l'obturateur (30) sont au moins partiellement constitués d'un polymère rigide.

20. Soupape de retenue selon l'une des revendications 1 à 16, dans laquelle l'arête d'étanchéité (51) et/ou l'obturateur (30) étant constitués partiellement d'un polymère élastique.

21. Soupape de retenue selon l'une des revendications 1 à 16, dans laquelle la famille de polymères étant choisie dans le groupe des polyamide, polyoléfines ou polyesters.

22. Soupape de retenue selon la revendication 19, dans laquelle le polymère rigide étant choisi dans le groupe de téréphtalate de polyéthylène et du téréphtalate de polybutylène.

23. Soupape de retenue selon la revendication 19, dans laquelle le polymère rigide est choisi dans le groupe constitué de PA6, PA6,6, PA6,10, PA11, PA12, PA12,12.

24. Soupape de retenue selon la revendication 19, dans laquelle le polymère élastique étant choisi dans le groupe constitué de polyétheramide, polyétheresteramide et polyétheresterétheramide.
